# EUROPÄISCHE PATENTSCHRIFT

(11) **EP 0 788 664 B1**
(45) Veröffentlichungstag und Bekanntmachung des Hinweises auf die Patenterteilung: **20.01.1999**
(21) Anmeldenummer: 95933322.0
(22) Anmeldetag: 07.10.1995
(51) Int. Cl.: H01L 41/09, H02N 2/16

(54) **WANDERWELLENMOTOR**
TRAVELLING WAVE MOTOR
MOTEUR UTILISANT DES ONDES PROGRESSIVES

(30) Priorität: 28.10.1994 DE 4438570
(43) Veröffentlichungstag der Anmeldung: 13.08.1997
(73) Patentinhaber: ROBERT BOSCH GMBH, 70442 Stuttgart (DE)
(72) Erfinder: LINDEMANN, Gert, D-72805 Lichtenstein (DE); KRAMER, Claus, D-74354 Besigheim (DE); EISELE, Ulrich, D-70199 Stuttgart (DE); HILBERATH, Thomas, D-71679 Asperg (DE); HEUSSNER, Karl-Heinz, D-71229 Leonberg (DE)
(86) Internationale Anmeldenummer: DE9501378
(87) Internationale Veröffentlichungsnummer: WO9613870

(56) Entgegenhaltungen:
- FR-A- 2 690 018
- US-A- 5 172 023

## Beschreibung

Die Erfindung betrifft einen Wanderwellenmotor nach dem Oberbegriff des Anspruchs 1.

### Stand der Technik

Wanderwellenmotoren sind bekannt. Bei diesen werden mechanische Schwingungen zur Erzeugung einer Drehbewegung ausgenutzt. Hierzu weist ein Stator Piezoelemente auf, über die elektrische Schwingungen in mechanische Wanderwellen umgewandelt werden. Diese Wanderwellen treiben durch Reibung einen an den Stator andrückbaren Rotor und eine mit dem Rotor verbundene Antriebsachse an. Der Stator weist hierzu einen scheibenförmigen Grundkörper auf, an dessen eine Seite eine ringförmige Piezokeramikschicht aufgeklebt ist. Die Piezokeramikschicht ist in zwei große Anregungsbereiche und zwei kleine Bereiche über ihren Umfang unterteilt. Die Anregungsbereiche sind in Segmente mit jeweils umgekehrter Polarisation eingeteilt, wobei jedes dieser Segmente einer halben Wellenlänge der zu erzeugenden Wanderwelle entspricht. Zwischen den zwei großen Anregungsbereichen sind jeweils die kleineren Bereiche angeordnet, wobei einer der kleineren Bereiche genau einem Viertel der Wellenlänge der Wanderwelle entspricht und somit eine räumliche Verschiebung der beiden Anregungsbereiche um genau diese Strecke bewirkt. Die beiden Anregungsbereiche sind je von einer durchgehend aufgedruckten Kontaktschicht bedeckt, die an eine Sinus- beziehungsweise eine Cosinus-Spannung gelegt ist. Als Gegenelektrode dient entweder eine elektrisch leitend ausgeführte Klebeschicht zum geerdeten Statorgrundkörper, oder es wird ein kapazitiver Kurzschluß zum Statorgrundkörper über eine sehr dünne Klebschicht benutzt. Die unterschiedlich polarisierten Segmente eines Anregungsbereiches der Piezokeramik werden also über eine gemeinsame Elektrode elektrisch angesteuert. Durch die alternierende Polarisation dehnt sich beispielsweise ein positiv polarisiertes Segment in axialer Richtung aus und ein negativ polarisiertes zieht sich in axialer Richtung zusammen. Dieser Längseffekt der Piezokeramik - Dehnung in Richtung des elektrischen Feldes - ist mit einem Quereffekt verbunden. Beim Ausdehnen des Segments in axialer Richtung verkürzt das Segment seine azimutale Länge, das heißt, so daß mit der Klebschicht und dem scheibenförmigen Statorgrundkörper ein sogenanntes monomorphes, piezoelektrisches Biegeelement entsteht. Es werden also Wölbungen des scheibenförmigen Statorgrundelements in axialer Richtung und entgegengesetzt der axialen Richtung erzeugt, die jeweils einer halben Wellenlänge der Wanderwelle entsprechen. Durch diese Wanderwelle wird der mit dem Stator in Reibschluß stehende Rotor in Drehung versetzt.

Derartige Wanderwellenmotoren sind aufgrund ihres geringen Volumenbedarfs und ihres relativ hohen Drehmoments bei relativ niedrigen Drehzahlen insbesondere zum Einsatz als Stellmotoren, beispielsweise in Kraftfahrzeugen, geeignet. Bei den bekannten Wanderwellenmotoren ist jedoch nachteilig, daß die ringförmige Piezokeramik und der scheibenförmige Statorgrundkörper einerseits beim Heißverkleben und andererseits während des Betriebes des Wanderwellenmotors erwärmt werden. Durch unterschiedliche Wärmeausdehungskoeffizienten der Piezokeramik und des Grundkörpers ergeben sich mechanische Spannungen, die zu einer Zerstörung der Piezokeramik führen können. Weiterhin entstehen innerhalb der Piezokeramik durch die Umkehrung der Polarisationsrichtung aneinandergrenzender Segmente innere Spannungen, die ebenfalls zu einer Zerstörung der Piezokeramik führen können. Darüber hinaus müssen für die segmentweise entgegengesetzte Polarisierung der Piezokeramik gesonderte Kontaktierungen vorgesehen sein, die zu zusätzlichen Aufwendungen führen. Weiterhin ist nachteilig, daß durch die örtlich getrennte Anregung, das heißt, durch die beiden Anregungsbereiche, zwei getrennte, stehende Wellen erzeugt werden, denen der Statorgrundkörper als Schwingungsmedium zur Verfügung gestellt werden muß, in dem sich die Wellen zu der Wanderwelle überlagern können. Hierzu ist eine Anregung des Grundkörpers in der Nähe seiner Resonanzfrequenz notwendig, so daß eine spezielle Formgebung des Statorgrundkörpers notwendig ist. Eine Geometrie und die Materialeigenschaften des Statorgrundkörpers müssen so abgestimmt sein, daß bei der gewünschten Frequenz Schwingungseigenformen angeregt werden. Hierzu muß das Material eine bestimmte Steifigkeit und eine geringe Dämpfung aufweisen. Bekannt ist es, diese Statorgrundkörper aus einer schwingungsfähigen Bronze herzustellen, die nur sehr kostenaufwendig beschafft werden kann.

Aus FR-A-2 690 018 ist ein Wanderwellenmotor bekannt, wobei der Stator von zwei miteinander verhandenen Piezokeramikschichten gebildet ist.

Der Erfindung liegt daher die Aufgabe zugrunde, einen Wanderwellenmotor der gattungsgemäßen Art zu schaffen, der einfach aufgebaut ist, ein vorteilhaftes Betriebsverhalten besitzt und die obengenannten Nachteile nicht aufweist.

### Vorteile der Erfindung

Der erfindungsgemäße Wanderwellenmotor mit den im Anspruch 1 genannten Merkmalen bietet den Vorteil, daß die zusätzliche Anordnung eines Schwingungsmediums nicht mehr erforderlich ist. Hierdurch kommt es zu einer erheblichen Gewichtseinsparung für den Stator und damit für den gesamten Wanderwellenmotor. Dadurch, daß der Stator von zwei miteinander verbundenen Piezokeramikschichten gebildet wird, die über jeweils eine eine Schaltungsanordnung aufweisende Kontaktierungsschicht anregbar sind, wird es möglich, den gesamten Stator in Foliengießtechnik, Siebdruck und Lameniertechnik herzustellen, womit eine erhebliche Kosteneinsparung gegenüber den bisherigen Statoren erzielbar ist. Der gesamte Stator besitzt somit vorzugsweise einen sandwichartigen Aufbau aus den Piezokeramikschichten, den Kontaktierungsschichten sowie einer Isolierungsschicht, die durch Foliengießtechnik, Siebtechnik und Lameniertechnik sowie anschließender gemeinsamer Versinterung zu einem kompakten, wirkungsvollen sowie hochbelastbaren Stator verbindbar sind. Durch diesen bimorphen - zwei Piezokeramikschichten - beziehungsweise trimorphen - zusätzliche Isolierschicht - Aufbau des Stators kann dieser zu größeren Amplituden der Wanderwelle angeregt werden, so daß sich ein verbessertes Betriebsverhalten des gesamten Wanderwellenmotors ergibt. Darüber hinaus braucht auf keine Resonanzfrequenz eines zusätzlichen Schwingungsmediums Rücksicht genommen zu werden, so daß sich eine verbesserte Ansteuerung des Wanderwellenmotors über die elektrische Anregungsfrequenz der Piezokeramikschichten ergibt. Weiterhin ist der erfindungsgemäße Rotor sehr vorteilhaft geeignet, durch seinen in sich symmetrischen Aufbau zum Antrieb einer Doppelrotoranordnung eingesetzt zu werden. Durch ein beidseitiges symmetrisches Angreifen von zwei Rotoren an den erfindungsgemäßen Stator läßt sich ein höheres Drehmoment mit dem Wanderwellenmotor erzielen. Darüber hinaus kommt es zu einer Verringerung eines Verschleißes, da die Umwandlung der Wanderwelle in eine Rotation auf zwei Rotoren verteilt wird.

Weitere vorteilhafte Ausgestaltungen der Erfindung ergeben sich aus den übrigen in den Unteransprüchen genannten Merkmalen.

### Zeichnung

Die Erfindung wird nachfolgend in Ausführungsbeispielen anhand der zugehörigen Zeichnungen näher erläutert. Es zeigen:
- Figur 1: eine Schnittdarstellung eines erfindungsgemäßen Wanderwellenmotors;
- Figur 2: eine Schnittdarstellung eines erfindungsgemäßen Wanderwellenmotors in einer zweiten Ausführung;
- Figur 3: eine Schnittdarstellung eines erfindungsgemäßen Wanderwellenmotors in einer dritten Ausführung;
- Figur 4: eine Schnittdarstellung eines erfindungsgemäßen Wanderwellenmotors in einer vierten Ausführung;
- Figur 5: eine Schnittdarstellung durch einen abgewickelten erfindungsgemäßen Stator und
- Figur 6: eine Draufsicht auf einen abgewickelten Teilbereich des Stators.

### Beschreibung der Ausführungsbeispiele

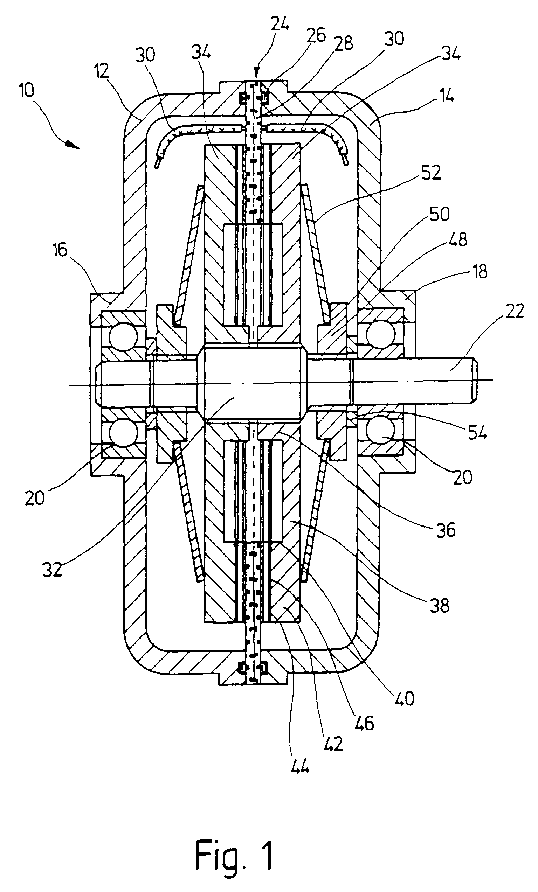

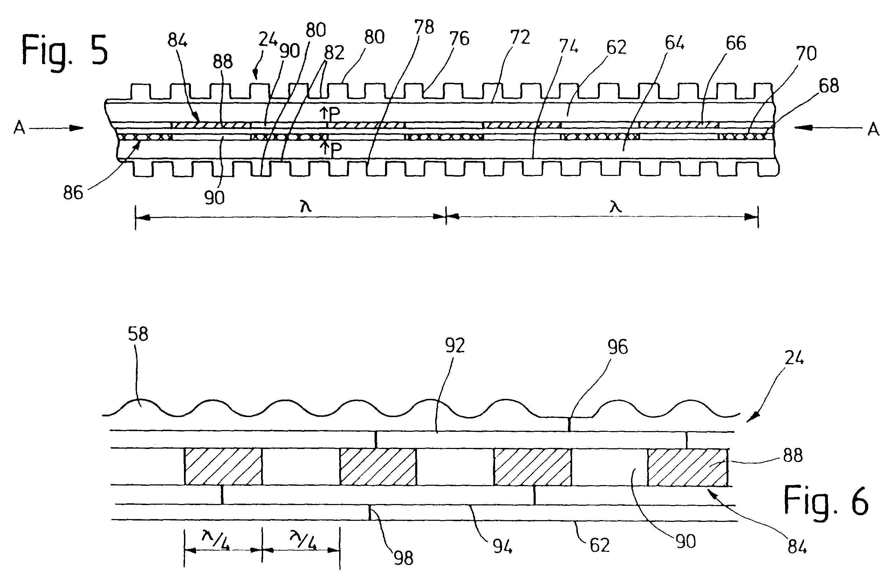

Figur 1 zeigt einen allgemein mit 10 bezeichneten Wanderwellenmotor. Der Wanderwellenmotor 10 besitzt ein topfförmiges Gehäuseteil 12 und ein dem Gehäuseteil 12 gegenüberliegendes, ebenfalls topfförmiges Gehäuseteil 14. Die Gehäuseteile 12 und 14 besitzen axiale Verdickungen 16 beziehungsweise 18, in denen jeweils ein Lager 20 angeordnet ist. Die Lager 20 nehmen eine Rotorwelle 22 auf, die auf seiten des Gehäuseteiles 14 über die axiale Verdickung 18 hinaus verlängert ist und dort - hier nicht dargestellte - Mittel zum Abgreifen einer Drehbewegung aufweisen kann. Die Gehäuseteile 12 und 14 nehmen im zusammengefügten Zustand einen Stator 24 auf. Der Stator 24 wird von einer koaxial zur Rotorwelle 22 angeordneten Scheibe gebildet, die zwischen den Gehäuseteilen 12 und 14 durch hier angedeutete Elemente 26 festgespannt ist. Einzelheiten des Stators 24 werden anhand der Figuren 5 und 6 verdeutlicht; während hier nur der prinzipielle Grundaufbau des Wanderwellenmotors 10 erläutert wird. Der Stator 24 bildet somit eine ringförmige Scheibe 28 aus, deren Außenumfang zwischen den Gehäuseteilen 12 und 14 festgespannt ist und deren Innenumfang die Rotorwelle 22 umgreift. Der Stator 24 ist über hier angedeutete elektrische Verbindungen 30 mit einer noch zu erläuternden Spannungsquelle verbunden.

Die Rotorwelle 22 trägt auf einer Verdickung 32 zwei Rotoren 34, die mit der Rotorwelle 22 drehfest verbunden sind. Die Rotoren 34 weisen jeweils eine Ringhülse 36 auf, die unmittelbar auf der Verdickung 32 der Rotorwelle 22 fest angeordnet ist. Die Rotoren 34 sind auf der Verdickung 32 der Rotorwelle 22 verdrehfest, jedoch axial verschieblich gelagert. Hierzu können die Rotoren 34 und die Verdickung 32 eine entsprechende ineinandergreifende, axial verlaufende Verzahnung aufweisen.

Die Ringhülse 36 besitzt einen radial verlaufenden Flansch 38, der über eine Ringstufe 40 in einen Endabschnitt 42 übergeht. Der Endabschnitt 42 weist eine parallel zum Stator 24 verlaufende Kontaktfläche 44 auf, die mit einer Reibschicht 46 versehen ist. Die beiden in Figur 1 dargestellten Rotoren 34 besitzen die gleichen, lediglich seitenverkehrt angeordneten, Bestandteile.

Auf der Rotorwelle 22 ist weiterhin eine Buchse 48 drehfest mit der Rotorwelle 22 angeordnet. Die Buchse 48 bildet einen Bund 50 aus, an dem ein elastisches Element, beispielsweise eine Tellerfeder 52, anliegt. Die Tellerfeder 52 stützt sich einerseits an dem Bund 50 der Buchse 48 und andererseits an dem Endabschnitt 42 des Rotors 34 ab. Durch einen Zusammenbau der Wanderwellenmotoren 10 wird die Tellerfeder 52 somit vorgespannt und drückt den Endabschnitt 42 beziehungsweise die Reibschicht 46 gegen den Stator 24. Durch Einlegen von Unterlegscheiben 54 zwischen der Buchse 48 und dem Lager 20 kann die Vorspannung, mit der die Tellerfeder 52 gegen den Endabschnitt 42 des Rotors 34 drückt, eingestellt werden. Der Aufbau des Rotors 34 und dessen Beaufschlagung mit einer Federkraft wurde hier an dem in Figur 1 rechts des Stators 24 dargestellten Rotor 34 verdeutlicht. Der links des Stators 24 angeordnete Rotor 34 ist vollkommen analog aufgebaut und wird vollkommen analog verspannt. Durch die Anordnung der beiden Rotoren 34 jeweils auf einer Seite des Stators 24 erfolgt eine Kompensation der Andrückkräfte, mit denen die Rotoren 34 an den Stator 24 angedrückt werden. Eine Beschädigung des Stators 24 wird durch dessen gleichmäßige Beaufschlagung mit einer Vorspannkraft vermieden, und dessen Aufbau kann auf die Erzeugung und Übertragung der Wanderwellen optimiert werden, ohne daß zusätzliche, lediglich dem Abfangen einer Kraft dienende Stützschichten vorgesehen sein müssen.

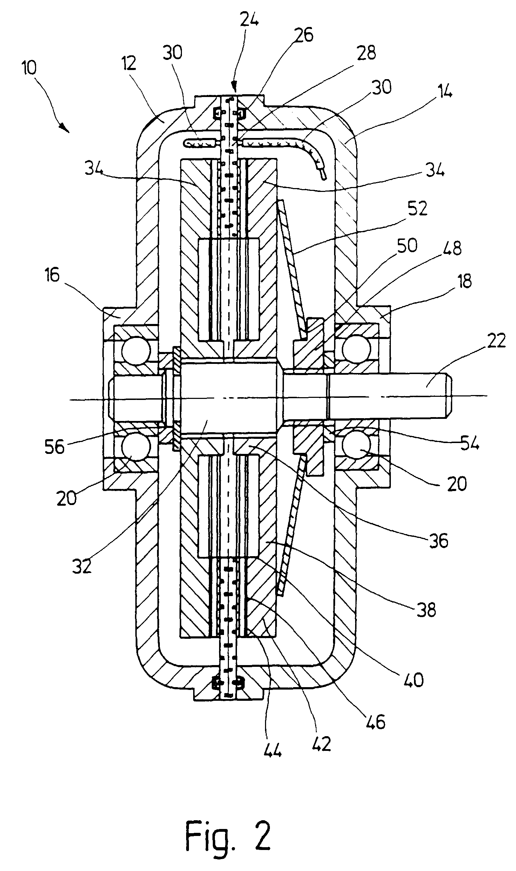

In der Figur 2 ist der Wanderwellenmotor 10 in einer weiteren Ausführung gezeigt. Gleiche Teile wie in Figur 1 sind mit gleichen Bezugszeichen versehen und nicht nochmals erläutert. Der Wanderwellenmotor 10 weist hier eine kürzere Bauform auf. Den beiden Rotoren 34 ist hier nur eine Tellerfeder 52 zugeordnet, die für den Andruck der Rotoren 34 an den Stator 24 sorgt. Der hier links dargestellte Rotor 34 liegt an einer auf der Antriebswelle 22 angeordneten Anschlagscheibe 56 an. Die notwendige Anpreßkraft wird von der Tellerfeder 52 aufgebracht, indem diese gegen den Endabschnitt 42 des hier rechts dargestellten Rotors 34 drückt, und dieser seinerseits über die Reibschicht 46 gegen den Stator 24 und diesen gegen die Reibschicht des Endabschnittes 42 des hier links dargestellten Stators 34 preßt. Die Gegenkraft für die Tellerfeder 52 wird einerseits durch die Anschlagscheibe 56 und die Formsteifigkeit der Rotoren 34, insbesondere deren Flansche 38, aufgebracht. Der Stator 24 ist hier somit ebenfalls symmetrisch zwischen zwei Rotoren 34 eingespannt, so daß zusätzliche Versteifungsmittel zum Abfangen der Andrückkräfte nicht notwendig sind.

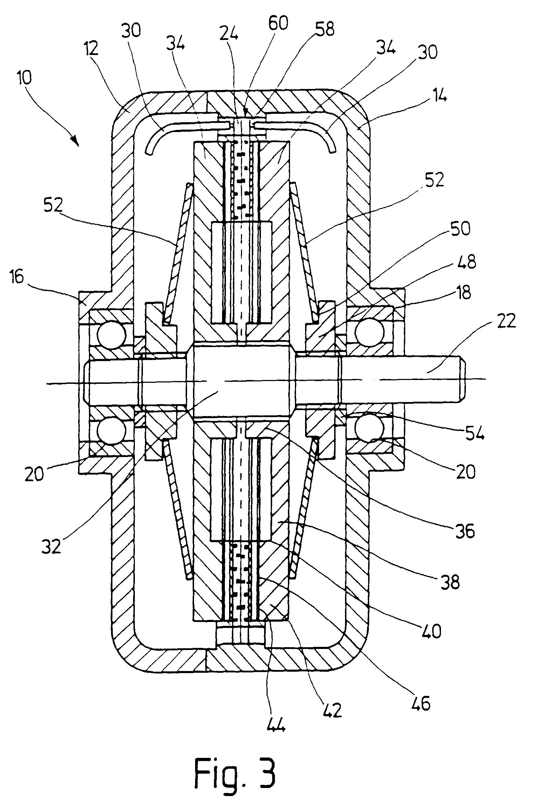

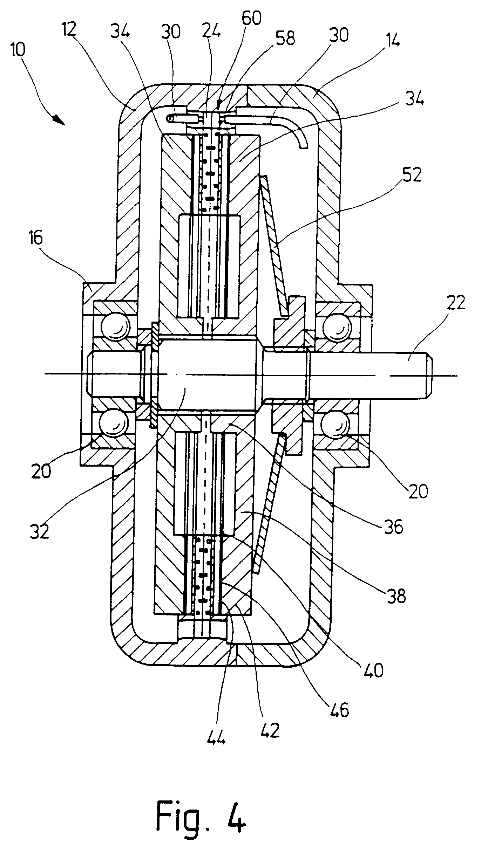

Die Figuren 3 und 4 zeigen weitere Ausführungsvarianten eines Wanderwellenmotors 10, bei dem wiederum gleiche Teile mit gleichen Bezugszeichen versehen und nicht nochmals erläutert sind. Die in der Figur 3 dargestellte Ausführungsform entspricht der in der Figur 1 dargestellten und die in der Figur 4 dargestellte Ausführungsform entspricht der in Figur 2 dargestellten, wobei bei beiden in den Figuren 3 und 4 gezeigten Beispielen der gleiche Unterschied zu den in den Figuren 1 und 2 gezeigten Beispielen besteht, so daß hier dieser nur einmal erläutert wird.

Der Stator 24 ist hier ebenfalls als ringförmige Scheibe 28 ausgebildet, wobei diese jedoch nicht zwischen den Gehäuseteilen 12 und 14 eingespannt ist. Der Stator 24 besitzt an seiner dem Gehäuseteile 14 zugewandten, zur Rotorwelle 22 koaxial verlaufenden Stirnfläche eine Struktur 58, die in eine entsprechende, an dem Gehäuseteil 14 angeordnete Gegenstruktur 60 formschlüssig eingreift. Die Strukturen 58 und 60 können beispielsweise durch eine ineinandergreifende, axial verlaufende Verzahnung gebildet sein. Die Strukturen 58 und 60 können hierzu beispielsweise Wellenstrukturen, dreieckförmige Strukturen, schwalbenschwanzförmige Strukturen usw. sein. Hierdurch wird gewährleistet, daß der Stator 24 mit seiner Struktur 58 in die Struktur 60 des Gehäuseteils 14 eingreift und somit verdrehsicher gelagert ist. Durch die axial verlaufenden Strukturen ist jedoch gewährleistet, daß der Stator 24 eine axiale Verschiebbarkeit besitzt. Durch diese axiale Verschiebbarkeit des Rotors 24 braucht dieser die von dem Anpreßdruck der Rotoren 34 ausgehenden, axial wirkenden Kräfte, die selbst bei beidseitig angreifenden Tellerfedern 52 sich nicht in jedem Fall hundertprozentig kompensieren lassen, aufnehmen. Der Stator 24 kann somit ohne Rücksicht auf irgendwelche ihn angreifenden statischen Andruckkräfte aufgebaut sein.

In der Figur 5 ist ein Ausschnitt aus einer Abwicklung des in den Figuren 1 bis 4 allgemein gezeigten Stators 24 in einer Schnittdarstellung dargestellt. Der Stator 24 besitzt eine erste Piezokeramikschicht 62 und eine zweite Piezokeramikschicht 64. Die erste Piezokeramikschicht 62 trägt eine erste Kontaktierungsschicht 66 und die zweite Piezokeramikschicht 64 eine zweite Kontaktierungsschicht 68. Die Kontaktierungsschichten 66 und 68 sind beispielsweise auf die Piezokeramikschicht 62 beziehungsweise 64 aufgedruckt. Die Piezokeramikschichten 62 und 64 besitzen eine parallel zur Antriebsachse 22 (Figur 1) gerichtete homogene Polarisation. Die Polarisierungsrichtung ist mit P angedeutet. Zwischen den Kontaktierungsschichten 66 und 68 ist eine Isolierschicht 70 angeordnet. Die Isolierschicht 70 besteht beispielsweise aus einer Kunststoffschicht oder einem anderen, elektrisch nicht leitenden, geeigneten Material, beispielsweise einer neutralen technischen Keramik. An ihren den Kontaktierungsschichten 66 und 68 abgewandten Seiten besitzen die Piezokeramikschichten 62 und 64 jeweils eine Metallisierung 72 beziehungsweise 74. Die Metallisierungen 72 und 74 sind durchgehend über den gesamten Umfang des Stators 24 vorgesehen. Auf der Metallisierung 72 ist eine erste Profilschicht 76 angeordnet, während auf der Metallisierung 74 eine zweite Profilschicht 78 angeordnet ist. Die Profilschichten 76 und 78 besitzen podestartige Erhöhungen 80, die über den Umfang des Stators 24 beabstandet zueinander angeordnet sind. Die Erhöhungen 80 können beispielsweise einzeln auf der Metallisierung 72 beziehungsweise 74 strukturiert sein, oder diese sind über Stege 82 miteinander verbunden.

Die Kontaktierungsschichten 66 und 68 besitzen jeweils eine Schaltungsanordnung 84 beziehungsweise 86, die jeweils eine Anzahl von Kontaktsegmenten 88 aufweisen. Die Kontaktsegmente 88 besitzen eine Länge, die einem Viertel einer Wellenlänge λ einer angestrebten Wanderwelle entspricht. Die Kontaktsegmente 88 sind in einem Abstand zueinander angeordnet, der ebenfalls einer Länge von einem Viertel der Wellenlänge λ der Wanderwelle entspricht. Somit sind pro Wellenlänge λ zwei Kontaktsegmente 88 und zwei Zwischenräume 90 vorgesehen. Über den Umfang des Stators 24 wiederholt sich die Anordnung der Kontaktsegmente 88 beziehungsweise der Zwischenräume 90 periodisch, so daß der Umfang des Stators 24 ein ganzzahliges Vielfaches der Wellenlänge λ der Wanderwelle beträgt. Die Kontaktsegmente 88 der Schaltungsanordnung 84 sind dabei jeweils um ein Viertel der Wellenlänge λ zu den Kontaktsegmenten 88 der Schaltungsanordnung 86 versetzt.

In der Figur 6 ist eine axiale Draufsicht auf einen aufgeschnittenen Stator 24 entlang der Linie A'-A aus Figur 5 gezeigt. Es ist die Schaltungsanordnung 84 mit ihren Kontaktsegmenten 88 zu erkennen. Die Kontaktsegmente 88 sind um ein Viertel der Wellenlänge λ zueinander versetzt angeordnet, wobei die Zwischenräume 90 ebenfalls einem Viertel der Wellenlänge λ entsprechen. Die Kontaktsegmente 88 bestehen beispielsweise aus Kupfer beziehungsweise Aluminium. Die Kontaktsegmente sind mit einer Leiterbahn 92 beziehungsweise einer Leiterbahn 94 elektrisch leitend verbunden. Die Verschaltung der Kontaktsegmente 88 erfolgt dabei so, daß diese alternierend immer abwechselnd mit der Leiterbahn 92 beziehungsweise der Leiterbahn 94 kontaktiert sind. Die Leiterbahn 92 besitzt einen Anschlußbereich 96. Die Leiterbahn 94 besitzt einen Anschlußbereich 98. Die Anschlußbereiche 96 und 98 sind über die in Figur 1 gezeigte eine Verbindung 30 mit einer Sinus-Spannungsquelle verbunden, wobei der Anschlußbereich 96 beispielsweise mit einem Plus-Pol und der Anschlußbereich 98 mit einem Minus-Pol der Sinus-Spannungsquelle verbunden sind. Sowohl die Kontaktbereiche 88 als auch die Leiterbahnen 92 und 94 und die Anschlußbereiche 96 und 98 können auf die Piezokeramikschicht 62 durch bekannte Drucktechniken aufgedruckt sein.

Die Piezokeramikschicht 62 ragt sowohl nach unten als auch nach oben über die Schaltungsanordnung 84 hinaus. Nach oben besitzt die Piezokeramikschicht 62 die hier angedeutete Struktur 58, die in die entsprechende Gegenstruktur 60 (Figur 3) formschlüssig eingreift.

Die Piezokeramikschicht 64 mit ihrer Schaltungsanordnung 86 ist vollkommen analog aufgebaut, wobei die Kontaktsegmente 88 dort - wie bereits erwähnt - um ein Viertel der Wellenlänge λ versetzt angeordnet sind. Die Anschlußbereiche der Schaltungsanordnung 86 sind mit dem Plus-Pol beziehungsweise dem Minus-Pol einer Cosinus-Spannungsquelle verbunden. Hierzu dient die weitere in Figur 1 gezeigte Verbindung 30.

Der Stator 24 ist somit insgesamt sehr kompakt aufgebaut, und kann mittels bekannter Folien-, Siebdruck- und Lameniertechniken hergestellt werden, so daß nach einem Sinterprozeß ein Ringverbund entsteht. Der Stator 24 wird durch die beschriebene Anordnung zu einem piezoelektrischen Bimorphelement beziehungsweise, je nach Dicke und Steifigkeit der Isolierschicht 70, zu einem piezoelektrischen Trimorphelement verschaltet.

Durch die Anordnung der Schaltungsanordnung 84 beziehungsweise 86, die jeweils um ein Viertel der Wellenlänge λ zueinander versetzt angeordnete Kontaktierungssegmente 88 aufweisen und durch die Ansteuerung der Schaltungsanordnung 84 mit einer Sinus-Spannung gegen dessen als Masseelektrode dienenden Metallisierung 72 und die Ansteuerung der zweiten Schaltungsanordnung 86 mit einer Cosinus-Spannung gegen die Metallisierung 74 entsteht durch Überlagerung der elektrischen Felder ein elektrisches Drehfeld in den beiden Piezokeramikschichten 62 und 64. Dieses Drehfeld ist zur gleichen Zeit und am gleichen Ort in der einen Piezokeramikschicht parallel zur Polarisation P und in der anderen Piezokeramikschicht antiparallel zur Polarisation P gerichtet. Die eine Piezokeramikschicht verkürzt dadurch ihre azimutale Länge in einem Bereich annähernd konstanter Feldstärke, während die zweite Piezokeramikschicht sich verlängert. Durch die entgegengesetzte Längenänderung der beiden Piezokeramikschichten 62 und 64 entsteht eine mechanische Spannung, die zu einer Durchbiegung dieser Bereiche der Piezokeramikschichten 62 und 64 führen. Da die elektrische Feldstärke entsprechend der angelegten Spannung einen sinusförmigen, periodischen Verlauf über den Umfang des Stators 24 aufweist, ergibt sich eine sinusförmige Verbiegung des Stators 24. Durch die Speisung der Piezokeramikschichten 62 und 64 mit Wechselspannung wandert diese sinusförmige Verformung als Wanderwelle über den Umfang des Stators 24. Diese Wanderwelle wird über die Profilschichten 76 beziehungsweise 78 an die Reibschichten 46 der Rotoren 34 übertragen, die somit in Rotation versetzt werden.

Da der Stator 24 zum Übertragen der Wanderwelle keinerlei zusätzliches Schwingungsmedium benötigt, ist die Beachtung einer Resonanzfrequenz dieses zusätzlichen Schwingungsmediums nicht notwendig. Lediglich die Isolierschicht 70 kann gegebenenfalls neben der Isolierung der Schaltungsanordnungen 84 und 86 für die Steifigkeit des gesamten Stators 24 und zur Abstimmung einer Resonanzfrequenz der gesamten Anordnung des Stators 24 auf eine gewünschte Anregungsfrequenz genutzt werden. Da kein zusätzliches Schwingungsmedium zum Übertragen der Wanderwelle auf die Rotoren 34 vorhanden ist, läuft der gesamte Vorgang quasi-statisch ab, das heißt, die Verformung des Stators 24 kann durch eine entsprechende Spannungsversorgung zu jedem Zeitpunkt eingefroren werden. Es entfällt dadurch die Notwendigkeit der Anregung mit einer Resonanzfrequenz, da eine Amplitude der Verformung des Stators 24 durch das von den zwei Piezokeramikschichten 62 beziehungsweise 64 gebildete Bimorphelement größer ist als bei einem Monomorphelement. Eine Amplitudenerhöhung durch Anregung mit einer Resonanzfrequenz kann jedoch - wie erwähnt - über die Isolierschicht 70 - auch hier genutzt werden. Man erhält somit einen zusätzlichen Freiheitsgrad bei der Auslegung der Wanderwellenmotoren 10.

Weiterhin ist es möglich, durch die zwangsweise, quasi-statisch, wanderwellenartig ablaufende Verformung des Stators 24 unter Verzicht auf eine resonante Wellenausbreitung diesen bei Linearmotoren einzusetzen. Die in Figur 5 gezeigte Abwicklung kann hierbei anstelle eines Ringes auch als eine beispielsweise rechteckförmige Keramikscheibe (Stator 24) ausgeführt werden. Die Länge der Keramikscheibe ist hierbei in Bewegungsrichtung der erzeugten wellenförmigen Verformung größer als die Breite der Keramikscheibe. Durch den Verzicht auf eine resonante Wellenausbreitung kommt es an den Enden des Stators 24 in Bewegungsrichtung zu keinen Reflexionen, die bei der Wellenausbreitung nach einem herkömmlichen Verfahren die Wanderwelle zerstören würden. Zur Unterdrückung von Reflexionen müssen somit keine zusätzlichen Maßnahmen getroffen werden.

Insgesamt ist somit ein Wanderwellenmotor 10 geschaffen, der einen Stator 24 aufweist, der einfach und kompakt aufgebaut ist und sowohl für Dreh- als Linearantriebe einsetzbar ist. Gegenüber bekannten Statoren ist der erfindungsgemäße Stator 24 durch Anwendung von Foliengießtechnik, Siebdruck und Lameniertechnik einfach und preiswert herzustellen. Für die Anordnung der Kontaktsegmente 88 sind keine getrennten Anregungsfelder mehr notwendig, so daß durch eine einfach herzustellende, symmetrische Anordnung der Kontaktsegmente 88 eine Wanderwelle erzeugt werden kann. Hierzu sind insgesamt nur vier elektrische Anschlüsse notwendig, die durch allgemein bekannte, einfach zu realisierende, gedruckte Verbindungen hergestellt werden können. Durch die mit dem neuen Stator 24 mögliche Doppelrotoranordnung der zwei Rotoren 34 läßt sich trotz des vereinfachten Aufbaus ein höheres Drehmoment bei gleichzeitig geringerem Verschleiß der Reibschichten 46 erzielen.

## Patentansprüche

1. Wanderwellenmotor mit einem eine elektrisch anregbare Piezokeramik aufweisenden Stator, an den ein Rotor in Reibkontakt bringbar ist, wobei der Stator (24) von zwei miteinander verbundenen Piezokeramikschichten (62, 64) gebildet wird, die über jeweils eine eine Schaltungsanordnung (84, 86) aufweisende Kontaktierungsschicht (66, 68) anregbar sind, dadurch gekennzeichnet, daß die Piezokeramikschichten (62, 64) eine gleichgerichtete Polarisierung (P) aufweisen.

2. Wanderwellenmotor nach Anspruch 1, dadurch gekennzeichnet, daß die Schaltungsanordnungen (84, 86) sandwichartig zwischen den Piezokeramikschichten (62, 64) angeordnet sind, wobei zwischen den Schaltungsanordnungen (84, 86) eine Isolierschicht (70) liegt.

3. Wanderwellenmotor nach Anspruch 1 oder 2, dadurch gekennzeichnet, daß die Schaltungsanordnungen (84, 86) auf die Piezokeramikschichten (62, 64) aufgedruckt sind.

4. Wanderwellenmotor nach Anspruch 2, dadurch gekennzeichnet, daß die Isolierschicht (70) aus Kunststoff besteht.

5. Wanderwellenmotor nach Anspruch 2, dadurch gekennzeichnet, daß die Isolierschicht (70) aus neutraler technischer Keramik besteht.

6. Wanderwellenmotor nach einem der vorhergehenden Ansprüche, dadurch gekennzeichnet, daß die Schaltungsanordnungen (84, 86) von gleichmäßig über die Länge (Umfang) des Stators (24) angeordneten Kontaktsegmenten (88) gebildet werden.

7. Wanderwellenmotor nach Anspruch 6, dadurch gekennzeichnet, daß die Kontaktsegmente (88) eine Länge aufweisen, die einem Viertel einer Wellenlänge (λ) der Wanderwelle entsprechen.

8. Wnderwellenmotor nach Anspruch 6 oder 7, dadurch gekennzeichnet, daß die zwischen zwei Kontaktsegmenten (88) liegenden Abschnitte (90) eine Länge von einem Viertel der Wellenlänge (λ) der Wanderwelle aufweisen.

9. Wanderwellenmotor nach einem der Ansprüche 6 bis 8, dadurch gekennzeichnet, daß die Kontaktsegmente (88) der ersten Piezokeramikschicht (62) um ein Viertel der Wellenlänge (λ) der Wanderwelle versetzt zu den Kontaktsegmenten (88) der zweiten Piezokeramikschicht (64) angeordnet sind.

10. Wanderwellenmotor nach einem der vorhergehenden Ansprüche, dadurch gekennzeichnet, daß die Piezokeramikschichten (62, 64) an ihren den Schaltungsanordnungen (84, 86) gegenüberliegenden Seiten eine Metallisierung (Masseelektrode, 72, 74) aufweisen.

11. Wanderwellenmotor nach einem der vorhergehenden Ansprüche, dadurch gekennzeichnet, daß die erste Piezokeramikschicht (62) mit einer Sinus-Spannungsquelle verbunden ist.

12. Wanderwellenmotor nach einem der vorhergehenden Ansprüche, dadurch gekennzeichnet, daß die zweite Piezokeramikschicht (64) mit einer Cosinus-Spannungsquelle verbunden ist.

13. Wanderwellenmotor nach einem der Ansprüche 6 bis 12, dadurch gekennzeichnet, daß die Kontaktsegmente (88) einer Schaltungsanordnung (84 bzw. 86) alternierend mit einem Plus-Pol und einem Minus-Pol der Sinus- bzw. Cosinus- Spannungsquelle verbunden sind.

14. Wanderwellenmotor nach einem der vorhergehenden Ansprüche, dadurch gekennzeichnet, daß die Piezokeramikschichten (62, 64) eine größere radiale Erstreckung als die Schaltungsanordnungen (84, 86) besitzen.

15. Wanderwellenmotor nach einem der vorhergehenden Ansprüche, dadurch gekennzeichnet, daß ein die Schaltungsanordnung (84, 86) in Richtung eines Gehäuses (12, 14) überragender Abschnitt an seiner koaxialen Stirnfläche eine Struktur (58) aufweist, die zum Erreichen einer drehfesten Anordnung in eine am Gehäuse (12, 14) vorgesehene Gegenstruktur (60) formschlüssig eingreift.

16. Wanderwellenmotor nach Anspruch 15, dadurch gekennzeichnet, daß die Strukturen (58 und 60) eine axiale Verschiebbarkeit des Stators (24) gestatten.

17. Wanderwellenmotor nach einem der Ansprüche 15 oder 16, dadurch gekennzeichnet, daß die Strukturen (58, 60) eine wellenförmige, dreieckförmige, rechteckige oder schwalbenschwanzförmige Kontur besitzen.

18. Wanderwellenmotor nach einem der vorhergehenden Ansprüche, dadurch gekennzeichnet, daß die Schaltungsanordnungen (84, 86) und/oder die Metallisierungen (72, 74) durch Siebdruck aufgebracht sind.

19. Wanderwellenmotor nach einem der vorhergehenden Ansprüche, dadurch gekennzeichnet, daß die Piezokeramikschichten (62, 64) an ihrer dem Rotor (34) zugewandten Seite eine Profilschicht (76, 78) aufweisen.

20. Wanderwellenmotor nach Anspruch 19, dadurch gekennzeichnet, daß die Profilschicht (76, 78) von zueinander beabstandeten Erhöhungen (80) gebildet wird.

21. Wanderwellenmotor nach einem der Ansprüche 6 bis 20, dadurch gekennzeichnet, daß die Kontaktsegmente (88) eine Länge aufweisen, die größer als ein Viertel, aber kleiner als die Hälfte der Wellenlänge (λ) der Wanderwelle ist.

22. Wanderwellenmotor nach einem der Ansprüche 6 bis 21, dadurch gekennzeichnet, daß ein Mindestabstand zwischen zwei Kontaktsegmenten (88) größer als eine doppelte Dicke der Piezokeramikschichten (62, 64) beträgt.

23. Wanderwellenmotor nach einem der Ansprüche 6 bis 22, dadurch gekennzeichnet, daß der Stator (24) symmetrisch zwischen zwei Rotoren (34) angeordnet ist.

## Claims

1. Travelling wave motor having a stator which has an electrically excitable piezoceramic and with which a rotor can be brought into frictional contact, the stator (24) being formed by two piezoceramic layers (62, 64) which are connected to one another and which can be excited by means of a contacting layer (66, 68) which has in each case a circuit arrangement (84, 86), characterized in that the piezoceramic layers (62, 64) have the same polarity (P).

2. Travelling wave motor according to Claim 1, characterized in that the circuit arrangements (84, 86) are arranged in a sandwich-like fashion between the piezoceramic layers (62, 64), an insulating layer (70) lying between the circuit arrangements (84, 86).

3. Travelling wave motor according to Claim 1 or 2, characterized in that the circuit arrangements (84, 86) are printed onto the piezoceramic layers (62, 64).

4. Travelling wave motor according to Claim 2, characterized in that the insulating layer (70) is composed of plastic.

5. Travelling wave motor according to Claim 2, characterized in that the insulating layer (70) is composed of neutral technical ceramic.

6. Travelling wave motor according to one of the preceding claims, characterized in that the circuit arrangements (84, 86) are formed by contact segments (88) which are arranged uniformly over the length (circumference) of the stator (24).

7. Travelling wave motor according to Claim 6, characterized in that the contact segments (88) have a length which corresponds to a quarter of a wavelength (λ) of the travelling wave.

8. Travelling wave motor according to Claims 6 or 7, characterized in that the sections (90) lying between two contact segments (88) have a length of a quarter of the wavelength (λ) of the travelling wave.

9. Travelling wave motor according to one of Claims 6 to 8, characterized in that the contact segments (88) of the first piezoceramic layer (62) are arranged offset by a quarter of the wavelength (λ) of the travelling wave with respect to the contact segments (88) of the second piezoceramic layer (64).

10. Travelling wave motor according to one of the preceding claims, characterized in that the piezoceramic layers (62, 64) have a metallization (earth electrode, 72, 74) on their sides lying opposite the circuit arrangements (84, 86).

11. Travelling wave motor according to one of the preceding claims, characterized in that the first piezoceramic layer (62) is connected to a sine-wave voltage source.

12. Travelling wave motor according to one of the preceding claims, characterized in that the second piezoceramic layer (64) is connected to a cosine-wave voltage source.

13. Travelling wave motor according to one of Claims 6 to 12, characterized in that the contact segments (88) of a circuit arrangement (84 or 86) are alternatively connected to a positive pole and to a negative pole of the sine-wave or cosine-wave voltage source.

14. Travelling wave motor according to one of the preceding claims, characterized in that the piezoceramic layers (62, 64) have a larger radial extent than the circuit arrangements (84, 86).

15. Travelling wave motor according to one of the preceding claims, characterized in that a section, which projects beyond the circuit arrangements (84, 86) in the direction of a housing (12, 14), has, on its coaxial end face, a structure (58) which, in order to obtain an arrangement which is fixed in terms of rotation, engages positively in a mating structure (60) which is provided on the housing (12, 14).

16. Travelling wave motor according to Claim 15, characterized in that the structures (58 and 60) permit the stator (24) to be displaced axially.

17. Travelling wave motor according to one of Claims 15 or 16, characterized in that the structures (58, 60) have a wave-shaped, triangular, rectangular or dovetail-shaped contour.

18. Travelling wave motor according to one of the preceding claims, characterized in that the circuit arrangements (84, 86) and/or the metallizations (72, 74) are applied by means of screen printing.

19. Travelling wave motor according to one of preceding claims, characterized in that the piezoceramic layers (62, 64) have a profiled layer (76, 78) on their side facing the rotor (34).

20. Travelling wave motor according to Claim 19, characterized in that the profiled layer (76, 78) is formed by elevations (80) which are at a distance from one another.

21. Travelling wave motor according to one of Claims 6 to 20, characterized in that the contact segments (88) are of a length which is greater than a quarter, but smaller than half, the wavelength (λ) of the travelling wave.

22. Travelling wave motor according to one of Claims 6 to 21, characterized in that a minimum spacing between two contact segments (88) is greater than twice the thickness of the piezoceramic layers (62, 64).

23. Travelling wave motor according to one of Claims 6 to 22, characterized in that the stator (24) is arranged symmetrically between two rotors (34).

## Revendications

1. Moteur à ondes progressives, avec un stator qui présente une piézo-céramique pouvant être excitée électriquement , stator sur lequel on peut mettre en contact à friction un rotor, le stator (24) étant constitué de deux couches piézo-céramiques reliées entre elles (62, 64), qui peuvent être excitées au moyen respectivement d'une couche de mise en contact (66, 68), qui présente un circuit (84, 86),
caractérisé en ce que
les couches piézo-céramiques (62, 64) présentent une polarisation orientée dans le même sens (P).

2. Moteur à ondes progressives, selon la revendication 1,
caractérisé en ce que
les circuits (84, 86) sont disposés à la manière de sandwich entre les couches piézo-céramiques (62, 64), une couche isolante (70) se trouvant entre les circuits (84, 86).

3. Moteur à ondes progressives, selon la revendication 1 ou 2,
caractérisé en ce que
les circuits (84, 86) sont imprimés sur les couches piézo-céramiques (62, 64).

4. Moteur à ondes progressives, selon la revendication 2,
caractérisé en ce que
la couche isolante (70) est en matière plastique.

5. Moteur à ondes progressives, selon la revendication 2,
caractérisé en ce que
la couche isolante (70) est en une céramique technique neutre.

6. Moteur à ondes progressives, selon l'une des revendications précédentes,
caractérisé en ce que
les circuits (84, 86) sont constitués par des segments de contact (88), disposés régulièrement sur la longueur (le pourtour) du stator (24).

7. Moteur à ondes progressives, selon la revendication 6,
caractérisé en ce que
les segments de contact (88) présentent une longueur, qui correspond à un quart d'une longueur d'onde (λ) de l'onde progressive.

8. Moteur à ondes progressives, selon la revendication 6 ou 7,
caractérisé en ce que
les sections (90), qui se trouvent entre deux segments de contact (88) présentent une longueur égale au quart de la longueur d'onde (λ) de l'onde progressive.

9. Moteur à ondes progressives, selon l'une des revendications 6 à 8,
caractérisé en ce que
les segments de contact (88) de la première couche piézo-électrique (62) sont décalés par rapport aux segments de contact (88) de la seconde couche piézo-électrique (64) d'un quart de la longueur d'onde (λ) de l'onde progressive.

10. Moteur à ondes progressives, selon l'une des revendications précédentes,
caractérisé en ce que
les couches piézo-céramiques (62, 64) présentent sur leurs côtés opposés aux circuits (84, 86) une métallisation (électrode de masse, 72, 74).

11. Moteur à ondes progressives, selon l'une des revendications précédentes,
caractérisé en ce que
la première couche piézo-céramique (62) est reliée à une source de tension sinusoïdale.

12. Moteur à ondes progressives, selon l'une des revendications précédentes,
caractérisé en ce que
la seconde couche piézo-céramique est reliée à une source de tension cosinusoïdale.

13. Moteur à ondes progressives, selon l'une des revendications 6 à 12,
caractérisé en ce que
les segments de contact (88) d'un circuit (84 ou 86) sont reliés alternativement à un pôle plus et à un pôle moins de la source de tension sinusoïdale ou de la source de tension cosinusoïdale.

14. Moteur à ondes progressives, selon l'une des revendications précédentes,
caractérisé en ce que
les couches piézo-céramiques (62, 64) possèdent une étendue radiale plus grande que les circuits (84, 86).

15. Moteur à ondes progressives, selon l'une des revendications précédentes,
caractérisé en ce que
une section, qui dépasse le circuit (84, 86) en direction d'un boîtier (12, 14) présente sur sa face frontale coaxiale une structure (58), qui vient en prise par engagement de forme, pour atteindre une disposition solidaire en rotation, dans une structure opposée (60) prévue sur le boîtier (12, 14).

16. Moteur à ondes progressives, selon la revendication 15,
caractérisé en ce que
les structures (58 et 60) permettent un coulissement axial du stator (24).

17. Moteur à ondes progressives, selon l'une des revendications 15 ou 16,
caractérisé en ce que
les structures (58, 60) possèdent un contour en forme d'onde, en forme de triangle , de forme rectangulaire ou ayant la forme d'une queue d'aronde.

18. Moteur à ondes progressives, selon l'une des revendications précédentes,
caractérisé en ce que
les circuits (84, 86) et/ou les métallisations (72, 74) sont déposés par sérigraphie.

19. Moteur à ondes progressives, selon l'une des revendications précédentes,
caractérisé en ce que
les couches piézo-céramiques (62, 64) présentent sur leur côté tourné vers le rotor (34) une couche de profilé (76, 78).

20. Moteur à ondes progressives, selon la revendication 19,
caractérisé en ce que
la couche de profilé (76, 78) est formée par des surélévations (80), situées à une certaine distance les unes des autres.

21. Moteur à ondes progressives, selon l'une des revendications 6 à 20,
caractérisé en ce que
les segments de contact (88) présentent une longueur, qui est plus grande que le quart, mais plus petite que la moitié de la longueur d'onde (λ) de l'onde progressive.

22. Moteur à ondes progressives, selon l'une des revendications 6 à 21,
caractérisé en ce que
la distance minimale entre deux segments de contact (88) est plus grande que le double de l'épaisseur des couches piézo-céramiques (62, 64)

23. Moteur à ondes progressives, selon l'une des revendications 6 à 22,
caractérisé en ce que
le stator (24) est disposé de façon symétrique entre deux rotors (34).
